Europäisches Patentamt

European Patent Office

Office européen des brevets

(11) Publication number: **0 050 495**
**B1**

(12) **EUROPEAN PATENT SPECIFICATION**

(45) Date of publication of patent specification: **22.05.85**

(51) Int. Cl.⁴: **G 02 B 6/44**

(21) Application number: **81304842.8**

(22) Date of filing: **16.10.81**

(54) Manufacture of a flexible stranded body.

(30) Priority: **18.10.80 GB 8033698**

(43) Date of publication of application:
**28.04.82 Bulletin 82/17**

(45) Publication of the grant of the patent:
**22.05.85 Bulletin 85/21**

(84) Designated Contracting States:
**AT BE CH DE FR IT LI NL SE**

(56) References cited:
**DE-A-2 728 642**
**DE-A-2 819 484**
**DE-A-3 000 109**

(73) Proprietor: **BICC Public Limited Company**
**21, Bloomsbury Street**
**London, WC1B 3QN (GB)**

(72) Inventor: **Dey, Philip**
**24 Hill Side**
**New Barnet Hertfordshire EN5, 1LU (GB)**
Inventor: **Gaylard, Bernard**
**2 Ollerbarrow Road**
**Hale Altrincham Cheshire (GB)**
Inventor: **Taylor, David Alexander**
**51 Grange Road**
**Kenton Middlesex (GB)**

(74) Representative: **Ross Gower, Edward Lewis et al**
**BICC plc Patents Department 38 Wood Lane**
**London W12 7DX (GB)**

Courier Press, Leamington Spa, England.

## Description

This invention relates to flexible stranded bodies of the kind which comprise a plurality of helically wound bare elongate elements of metal or metal alloy and which are adapted to be freely supported from spaced supports in long lengths. The invention is especially, but not exclusively, concerned with overhead electric conductors of the kind which comprise one or more than one layer of helically wound bare elongate elements of electrically conductive metal or metal alloy, but it is to be understood that the invention does not exclude flexible stranded bodies not normally intended to carry electric current, for instance stranded wire ropes.

In the Complete Specification of our British Patent No. 1598438, there is described and claimed a flexible stranded body which includes at least one optical waveguide for use in the communications field adapted for transmission of light and which comprises at least one layer of helically wound bare elongate elements of metal or metal alloy, at least one elongate compartment within and extending throughout the length of the stranded body and, loosely housed in the elongate compartments or in at least one of the elongate compartments, at least one separate optical fibre and/or at least one optical bundle, as defined in the aforesaid Complete Specification.

One form of flexible stranded body lying within the scope of the aforesaid British patent comprises a substantially circumferentially rigid central core of metal or metal alloy having an elongate compartment within and extending throughout the length of the core; at least one optical fibre loosely housed in, and of a length substantially greater than that of, the elongate compartment; and, surrounding the central core, at least one layer of helically wound bare elongate elements of metal or metal alloy. Such a flexible stranded body will hereinafter, for convenience, be referred to as "a flexible stranded body of the kind described".

By virtue of being housed loosely in the elongate compartment of a flexible stranded body of the kind described, limited relative movement between the or each optical fibre and the stranded body can take place when the stranded body vibrates, oscillates or is otherwise flexed, as may, for example, occur in the case when an overhead electric conductor or other freely supported flexible stranded body is subjected to winds. Limited relative movement between the or each optical fibre and the stranded body can also occur when the stranded body is subjected to a changing tensile load during and after its installation due to forces imposed on it by winches and brakes, etc., which are used in tensioning the stranded body to obtain a predetermined sagging condition; after installation, changes in tensile load in a stranded body can also occur due to changes in external loading and in temperature. Limited relative movement between the or each optical fibre and the stranded body can also occur whilst the stranded body is in service and creep gives rise to non-elastic extension of the stranded body.

As is described in our British Patent No. 1598438, a flexible stranded body of the kind described is manufactured by causing a preformed elongate member of metal or metal alloy of approximately U-shaped transverse cross-section to travel in the direction of its length, feeding into the space bounded by the U-shaped elongate member at least one optical fibre, transversely folding or otherwise shaping the advancing U-shaped elongate member in such a way as to form a substantially circumferentially rigid core having a closed elongate compartment within and extending throughout the length of the core in which the or each advancing optical fibre is loosely housed, and applying around the central core so formed at least one layer of helically wound bare elongate elements of metal or metal alloy.

US Patent Specification No. 4212097 describes a method of manufacturing an optical cable element comprising a plastics tube in which at least one optical fibre is loosely housed, which method comprises causing an extruded plastics tube to travel in the direction of its length, cutting the advancing tube longitudinally and continuously along its length to a depth that is equal to the thickness of the tube wall on the cutting plane, separating the edges of the tube immediately downstream of the cutting operation to provide a gap therebetween, introducing into the tube through said gap at least one optical fibre advancing in the direction of its length, introducing into the tube through said gap a water-impermeable medium to substantially fill the tube, and uniting the cut edges of the tube, by exploiting the elasticity of the tube material, downstream of the positions at which the or each optical fibre and the water-impermeable medium are introduced into the tube.

DE—A—3000109 teaches that an optical fibre can be fed into a capillary tube by inserting a leading end of the optical fibre into the tube and then pumping water through the tube under such a pressure that it carries the optical fibre along the tube.

It is an object of the present invention to provide an improved method of manufacturing a flexible stranded body of the kind described.

According to the invention, the improved method comprises causing a preformed elongate member of metal or metal alloy of approximately U-shaped transverse cross-section to travel in the direction of its length, feeding into the space bounded by the U-shaped elongate member at least one optical fibre, transversely folding or otherwise shaping the advancing U-shaped elongate member in such a way as to form a substantially circumferentially rigid central core having a closed elongate compartment within and extending throughout the length of the core in which the or each advancing optical fibre is loosely housed, and applying around the central core so formed at least one layer of helically wound bare elongate elements of metal or metal alloy, and which method is characterised in that at least one substantially rigid tube having an external diameter which is less than the internal diameter of the elongate compartment is positioned in the space bounded by the U-shaped elongate member and extends beyond the means by which the U-shaped elongate member is transversely folded or otherwise shaped to form the central core, in that water-impermeable medium of a grease-like nature is injected under a controlled pressure and rate through a port in the wall of the tube into the tube and from the tube into the elongate compartment, in that the or each optical fibre is drawn through the rigid tube and into the elongate compartment by the greasy water-impermeable medium flowing towards the downstream end of the tube, and in that the rate at which the or each optical fibre is drawn into the elongate compartment is restrained, the consistency of the greasy water-impermeable medium, the pressure and rate at which it is injected into the compartment and the degree of restraint imparted to the or each advancing optical fibre being such that, in a predetermined length of the stranded body, the length of the or each optical fibre exceeds the length of the elongate compartment by a controlled extent and the space within the elongate compartment not occupied by the or each optical fibre is substantially filled with water-impermeable medium in a greasy state.

Preferably, the consistency of the greasy water-impermeable medium, the pressure and rate at which it is injected into the elongate compartment and the degree of restraint imparted to the or each advancing optical fibre are such that, in a predetermined length of the stranded body, the length of the or each optical fibre exceeds the length of the elongate compartment by a controlled amount lying in the range 1 to 3 per cent.

Application of one or more than one layer of helically wound bare elongate elements of metal or metal alloy around the central core may be effected in tandem with the operation of forming the central core or it may be effected as a separate operation or separate operations.

Preferably, excess greasy water-impermeable medium flows out of the downstream end of the tube and in an upstream direction between the U-shaped elongate member and the rigid tube and out of the U-shaped member, and may be collected in a reservoir positioned beneath the U-shaped member.

Greasy water-impermeable medium being injected through at least one port in the wall of the rigid tube, preferably is fed from a storage tank, the pressure and rate of flow of water-impermeable medium from the storage tank into the tube being manually or automatically controlled. The storage tank, rigid tube and reservoir positioned beneath the U-shaped member may form part of a circulatory system, water-impermeable medium collected in the reservoir from the U-shaped member being pumped back into the storage tank.

The rigid tube may have in its bore guide means for positioning a single optical fibre within the elongate compartment or two or more circumferentially spaced guide means for positioning two or more optical fibres in circumferentially spaced positions within the elongate compartment. The water-impermeable medium substantially filling the elongate compartment will serve to some extent to maintain a single optical fibre in the compartment spaced from the wall of the compartment or two or more optical fibres in the compartment circumferentially spaced with respect to one another although it will still permit relative movement between the optical fibres and the stranded body when required. The rigid tube may be caused to rotate about its longitudinal axis so that the optical fibres fed into the elongate compartment each follows a helical path, or the rigid tube may be caused to oscillate about its longitudinal axis so that the optical fibres being fed into the elongate compartment each follows a helical path whose direction of lay reverses at spaced positions along the length of the stranded body.

Where two or more substantially rigid tubes are positioned in the space bounded by the U-shaped elongate member, preferably they are arranged side-by-side in the form of an assembly and at least one optical fibre is fed through, and greasy water-impermeable medium is injected into, each tube. The assembly of tubes may be rotated or caused to oscillate about the longitudinal axis of the assembly.

The means for imparting restraint to the or each advancing optical fibre may take any convenient form, for example, a capstan or a pair of pinch rollers between which the optical fibre is caused to travel.

The preformed elongate member of metal or metal alloy of approximately U-shaped transverse cross-section is preferably an extrudate of aluminium or aluminium alloy but it may be a tape which has been preformed to approximately U-shaped transverse cross-section. In each case, after the elongate member has been transversely folded or otherwise shaped to form the central core, the abutting longitudinal edges of the elongate member may be welded or otherwise permanently secured together to close the elongate compartment. Preferably, in this case, the rigid tube will be arranged to extend downstream of the means for welding or otherwise securing the longitudinal edges of the elongate member together. If desired, before the or each layer of helically wound bare elongate elements of metal or metal alloy is applied to the central core, the central core may be fed into the space bounded by another advancing preformed elongate member of metal or metal alloy of approximately U-shaped transverse cross-section and said other elongate member transversely folded or otherwise shaped around the central core in such a way that its abutting longitudinally extending edges are circumferentially spaced with respect to the abutting longitudinally extending edges of the first elongate member.

In an alternative arrangement, the preformed elongate member of metal or metal alloy of approximately U-shaped transverse cross-section that is transversely folded or otherwise shaped to form the central core may be a tape which is transversely coiled to such an extent that it forms approximately two complete turns around the axis of the central core.

To provide for relative sliding movement between adjacent elongate elements of the layer or layers surrounding the central core and to assist in preventing water from gaining access to the flexible stranded body and thereby reduce risk of corrosion of the elongate elements, the interstices between the elongate elements may be filled with a water-impermeable medium of a grease-like nature.

Although the or each optical fibre of a flexible stranded body manufactured by the method of the present invention is preferably separate and unsupported, in some circumstances it may be a component element of an optical bundle (by which is meant a group of optical fibres or a group of fibres including at least one optical fibre and at least one non-optical reinforcing fibre or other reinforcing elongate member) or it may be supported by a flexible elongate carrier member which is loosely housed in the elongate compartment so that the required limited relative movement between the optical fibre and flexible stranded body can take place.

The flexible elongate carrier member supporting said fibre(s) may be a single flexible tape to one surface of which the or each optical fibre is secured by adhesive; viewed in transverse cross-section the tape may be corrugated so that it has a plurality of troughs extending along its length, in each of some or all of which an optical fibre is secured. In another embodiment, the flexible elongate carrier member may consist of two flexible tapes, one overlying the other, the or each optical fibre being sandwiched between the two tapes and being secured by adhesive to at least one of the adjacent surfaces of the tapes; one or each of these two tapes may be transversely corrugated as described above. Where one or each of two flexible tapes is transversely corrugated, the two tapes may be so bonded together that the or each optical fibre is secured within the flexible elongate carrier member so formed but is capable of limited movement within the trough in which it lies. In a further embodiment, the flexible elongate carrier member may comprise a single tape of plastics material in which the or each optical fibre is wholly or partially embedded.

The invention also includes apparatus for use in the manufacture of a flexible stranded body of the kind described by the improved method as hereinbefore described.

The flexible stranded body manufactured by the method of the present invention is especially suitable for use as an earth conductor of an overhead electric transmission line and, because it may be manufactured to have the same or approximately the same properties of sag and tension as those of conventional overhead conductors of substantially the same overall diameter, it provides the important advantage that the flexible stranded body can be used to replace an earth conductor or other overhead electric conductor of an existing overhead electric transmission system thereby to provide a communication means in the system. Thus, the invention provides a relatively inexpensive communications link between stations, substations and other locations along an electric transmission system.

Where the overhead stranded conductor manufactured by the method as hereinbefore described is an earth conductor of the system, the earth conductor may be suspended between the tops of towers or other supporting structures or it may be supported between the towers or other supporting structures at positions below the crossarms of the towers.

The invention is further illustrated by a description, by way of example, of the preferred method of manufacturing an overhead stranded conductor incorporating two optical fibres, with reference to the accompanying drawing, in which:—

Figure 1 is a transverse cross-sectional view of the overhead stranded conductor, and

Figure 2 is a fragmental diagrammatic representation of the method of manufacture of the overhead stranded conductor shown in Figure 1.

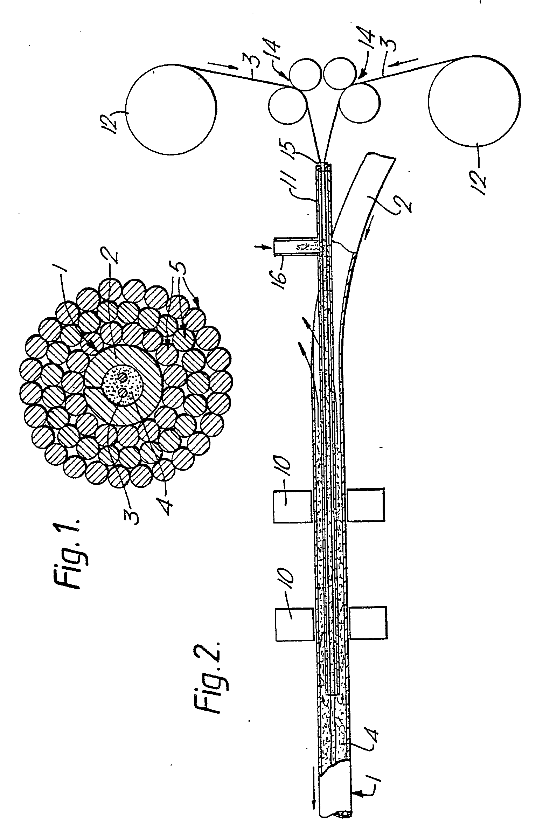

Referring to the drawing, the overhead stranded conductor shown in Figure 1 comprises a central core 1 constituted by a single elongate tubular member 2 of aluminium-based alloy, two optical fibres 3 loosely housed in, and of a length approximately 3% greater than that of, the bore of the elongate member, and, filling the space within the bore not occupied by the optical fibres, water-impermeable medium 4 in a greasy state. The central core 1 is surrounded by three layers 5 of helically wound round wires of aluminium-based alloy, the directions of lay of adjacent layers being of opposite hand.

In the method of manufacture as shown in Figure 2, a preformed elongate member 2 of aluminium-based alloy of approximately U-shaped transverse cross-section is caused to travel in the direction of its length towards two longitudinally spaced folding dies 10. Positioned axially in the space bounded by the U-shaped elongate member 2 and extending beyond the folding dies 10 is a rigid tube 11 having an external diameter which is less than the internal diameter of the central core 1 formed by folding the U-shaped elongate member. Two optical fibres 3 are drawn from spools 12 through pinch rollers 14 and a sealing gland 15, which is positioned at the upstream end of the tube 11, into the tube, the pinch rollers imparting a degree of restraint to each advancing optical fibre. Water-impermeable medium 4 in a greasy state is fed into the rigid tube 11 through a port 16 near the upstream end of the tube, the pressure and rate at which the greasy water-impermeable medium is injected into the tube being such that water-impermeable medium, flowing towards the downstream end of the tube, draws optical fibres 3 along the tube and into the bore of the core 1. Excess water-impermeable medium flows out of the downstream end of the tube and in an upstream direction between the U-shaped elongate member 2 and the tube and out over the walls of the U-shaped elongate member. The pressure and rate at which water-impermeable medium 4 in a greasy state is injected into the rigid tube 11 and the degree of restraint imparted to each advancing optical fibre by the pinch rollers 14 are such that, in a predetermined length of the stranded conductor, each optical fibre exceeds the length of the bore of the central core 1 by approximately 3% and the space within bore not occupied by the optical fibres is substantially filled with water-impermeable medium in a greasy state. Three layers of helically wound round wires of aluminium alloy are formed around the central core 1, the directions of lay of adjacent layers being of opposite hand, the layers being applied either in tandem with the operation of forming the central core or as separate operations.

**Claims**

1. A method of manufacturing a flexible stranded body comprising a substantially circumferentially rigid central core (1) of metal or metal alloy having an elongate compartment within and extending throughout the length of the core; at least one optical fibre (3) loosely housed in, and of a length substantially greater than that of, the elongate compartment; and, surrounding the central core, at least one layer (5) of helically wound bare elongate elements of metal or metal alloy, which method comprises causing a preformed elongate member (2) of metal or metal alloy of approximately U-shaped transverse cross-section to travel in the direction of its length, feeding into the space bounded by the U-shaped elongate member at least one optical fibre (3), transversely folding or otherwise shaping the advancing U-shaped elongate member in such a way as to form a substantially circumferentially rigid central core (1) having a closed elongate compartment within and extending throughout the length of the core in which the or each advancing optical fibre is loosely housed, and applying around the central core so formed at least one layer (5) of helically wound bare elongate elements of metal or metal alloy, characterised in that at least one substantially rigid tube (11) having an external diameter which is less than the internal diameter of the elongate compartment is positioned in the space bounded by the U-shaped elongate member and extends beyond the means (10) by which the U-shaped elongate member is transversely folded or otherwise shaped to form the central core, in that water-impermeable medium (4) of a grease-like nature is injected under a controlled pressure and rate through a port (16) in the wall of the tube into the tube and from the tube into the elongate compartment, in that the or each optical fibre is drawn through the rigid tube and into the elongate compartment by the greasy water-impermeable medium flowing towards the downstream end of the tube, and in that the rate at which the or each optical fibre is drawn into the elongate compartment is restrained, the consistency of the greasy water-impermeable medium, the pressure and rate at which it is injected into the compartment and the degree of restraint imparted to the or each advancing optical fibre being such that, in a predetermined length of the stranded body, the length of the or each optical fibre exceeds the length of the elongate compartment by a controlled extent and the space within the elongate compartment not occupied by the or each optical fibre is substantially filled with water-impermeable medium in a greasy state.

2. A method as claimed in Claim 1, characterised in that the consistency of the greasy water-impermeable medium, the pressure and rate at which it is injected into the elongate compartment and the degree of restraint imparted to the or each advancing optical fibre are such that, in a predetermined length of the stranded body, the length of the or each optical fibre exceeds the length of the elongate compartment by a controlled amount lying in the range 1 to 3%.

3. A method as claimed in Claim 1 or 2, characterised in that excess water-impermeable medium flows out of the downstream end of the tube and in an upstream direction between the U-shaped elongate member and the rigid tube and out of the U-shaped member.

4. A method as claimed in any one of the preceding Claims, wherein the rigid tube has in its bore guide means for positioning a single optical fibre within the elongate compartment or two or more circumferentially spaced guide means for positioning two or more optical fibres in circumferentially spaced positions within the elongate compartment.

5. A method as claimed in Claim 4, wherein the rigid tube is caused to rotate about its longitudinal axis so that the or each optical fibre fed into the elongate compartment follows a helical path.

6. A method as claimed in Claim 4, wherein the rigid tube is caused to oscillate about its longitudinal axis so that the or each optical fibre being fed into the elongate compartment follows a helical path whose direction of lay reverses at spaced positions along the length of the stranded body.

7. A method as claimed in any one of the preceding Claims, wherein restraint is imparted to the or each advancing optical fibre by causing it to travel between a pair of pinch rollers.

8. Apparatus for use in the manufacture of a flexible stranded body by the method claimed in Claim 1, which apparatus comprises means for causing a preformed elongate member (2) of metal or metal alloy of approximately U-shaped transverse cross-section to travel in the direction of its length, means for feeding into the space bounded by the U-shaped elongate member at least one optical fibre (3), and means (10) for transversely folding or otherwise shaping the advancing U-shaped elongate member in such a way as to form a substantially circumferentially rigid central core having a closed elongate compartment within and extending throughout the length of the core in which the or each advancing optical fibre is loosely housed, characterised in that the apparatus also includes at least one substantially rigid tube (11) which has an external diameter less than the internal diameter of the elongate compartment and which is positioned in the space bounded by the U-shaped elongate member and extends beyond the means for transversely folding or otherwise shaping the U-shaped elongate member to form the central core, the rigid tube having in its walls at least one port (16); means for injecting a water-impermeable medium (4) of a grease-like nature under a controlled rate and pressure through said port into the rigid tube from where it will flow into the elongate compartment; and means (14) for imparting restraint to the or each optical fibre that will be drawn by the flowing water-impermeable medium along the tube and into the elongate compartment.

**Revendications**

1. Procédé de fabrication d'un corps toronné souple comportant une âme centrale (1) à peu près rigide à sa périphérie, en métal ou en alliage métallique, possédant un compartiment allongé à l'intérieur de et s'étendant sur toute la longueur de l'âme; au moins une fibre optique (3) logée à l'aise dans, et d'une longueur nettement supérieure à celle du compartiment allongé; et, entourant l'âme centrale, au moins une couche (5) d'éléments allongés nus enroulés en hélice, en métal ou en alliage métallique, ce procédé comportant le passage d'un élément (2) allongé préformé en métal ou en alliage métallique à section transversale approximativement en U, dans le sens de sa longueur, l'introduction d'au moins une fibre optique (3) dans l'espace délimité par l'élément allongé en U, le pliage transversal ou autre profilage de l'élément allongé en U avançant de manière à réaliser une âme centrale (1) à peu près rigide à sa périphérie possédant un compartiment allongé fermé à l'intérieur de et s'étendant sur toute la longueur de l'âme dans laquelle la fibre ou chaque fibre optique avançant est logée à l'aise, et l'application, autour de l'âme centrale ainsi réalisée, d'au moins une couche (5) d'éléments allongés nus enroulés en hélice, en métal ou en alliage métallique, caractérisé en ce qu'au moins un tuyau (11) à peu près rigide à diamètre extérieur inférieur au diamètre intérieur du compartiment allongé est mis en place dans l'espace délimité par l'élément allongé en U et se prolonge au-delà des moyens (10) par lesquels l'élément allongé en U est plié transversalement ou autrement profilé pour constituer l'âme centrale, en ce qu'un produit hydrofuge (4) d'une nature semblable à celle d'une graisse est injecté à une pression et un débit régulés, par un orifice (16) dans la paroi du tuyau, dans le tuyau et du tuyau dans le compartiment allongé, en ce que la fibre ou chaque fibre optique est entraînée à travers le tuyau rigide et dans le compartiment allongé par le produit hydrofuge gras s'écoulant vers la sortie du tuyau, et en ce que la vitesse à laquelle la fibre ou chaque fibre optique est entraînée dans le compartiment allongé est freinée, la consistance du produit hydrofuge gras, la pression et le débit d'injection du produit dans le compartiment et le degré de freinage exercé sur la fibre ou chaque fibre avançant étant tels que, dans une longueur prédéterminée du corps toronné, la longueur de la fibre ou de chaque fibre optique dépasse dans une mesure donnée la longueur du compartiment allongé, et l'espace du compartiment allongé non occupé par la fibre ou par chaque fibre optique est en grande partie rempli par le produit hydrofuge à l'état de graisse.

2. Procédé selon la revendication 1, caractérisé en ce que la consistance du produit hydrofuge gras, la pression et le débit de son injection dans le compartiment allongé et le degré de freinage exercé sur la fibre ou chaque fibre optique avançant sont tels que, dans une longueur prédéterminée du corps toronné, la longueur de la fibre ou de chaque fibre optique dépasse la longueur du compartiment allongé dans une proportion donnée comprise entre 1 et 3 %.

3. Procédé selon la revendication 1 ou 2, caractérisé en ce que l'excédent de produit hydrofuge s'écoule à la sortie du tuyau et en remontant entre l'élément allongé en U et le tuyau rigide pour s'échapper à la sortie de l'élément en U.

4. Procédé selon l'une quelconque des revendications précédentes, caractérisé en ce que le tuyau rigide comporte dans sa partie creuse un moyen de guidage pour mettre en place une fibre optique unique à l'intérieur du compartiment allongé ou au moins deux moyens de guidage espacés dans le sens circulaire pour mettre en place au moins deux fibres optiques dans des positions espacées dans sens circulaire dans le compartiment allongé.

5. Procédé selon la revendication 4, caractérisé en ce qu'on fait tourner le tuyau rigide autour de son axe longitudinal afin que la fibre ou chaque fibre optique introduite dans le compartiment allongé suive un cheminement hélicoïdal.

6. Procédé selon la revendication 4, caractérisé en ce qu'on fait osciller le tuyau rigide autour de son axe longitudinal afin que la fibre ou chaque fibre optique introduite dans le compartiment allongé suive un cheminement hélicoïdal dont l'orientation s'inverse en des points espacés sur la longueur du corps toronné.

7. Procédé selon l'une quelconque des revendications précédentes, caractérisé en ce que le freinage est exercé sur la fibre ou chaque fibre optique avançant en la faisant passer entre deux galets presseurs.

8. Appareil utilisable pour la fabrication d'un corps toronné souple selon le procédé revendiqué à la revendication 1, lequel appareil comporte un moyen pour faire passer dans le sens de sa longueur un élément (2) allongé préformé, en métal ou en alliage métallique, à section transversale à peu près en U, un moyen pour introduire au moins une fibre optique (3) dans l'espace délimité par l'élément allongé en U, et un moyen (10) pour plier transversalement ou autrement profiler l'élément allongé en U avançant de manière à réaliser une âme centrale à peu près rigide à sa périphérie possédant un compartiment allongé fermé à l'intérieur de et s'étendant sur toute la longueur de l'âme dans laquelle la fibre ou chaque fibre optique avançant est logée à l'aise, caractérisé en ce que l'appareil comporte aussi au moins un tuyau à peu près rigide (11) à diamètre extérieur inférieur au diamètre intérieur du compartiment allongé et qui est mis en place dans l'espace délimité par l'élément allongé en U et se prolonge au-delà du moyen de pliage transversal ou autre profilage de l'élément allongé en U pour constituer l'âme centrale, le tuyau rigide comportant dans sa paroi au moins un orifice (16); un moyen pour injecter un produit hydrofuge (4) de nature semblable à celle de la graisse à un débit et une pression régulés à travers l'orifice dans le tuyau rigide, d'où il s'écoule dans le compartiment allongé; et un moyen (14) pour exercer un frein sur la fibre ou chaque fibre optique qui sera entraînée par l'écoulement du produit hydrofuge le long du tuyau et dans le compartiment allongé.

**Patentansprüche**

1. Verfahren zum Herstellen eines nachgiebigen, verseilten Körpers mit einem in Umfangsrichtung im wesentlichen starren, zentralen Kern (1) aus Metall oder einer Metallegierung, der in seinem Inneren eine längliche Kammer aufweist, die sich über die gesamte Länge des Kerns erstreckt, und in der mindestens eine optische Faser (3) lose aufgenommen ist, die im wesentlichen länger ist als die längliche Kammer, und wobei der zentrale Kern von mindestens einer Schicht (5) aus schraubenförmig gewundenen, blanken, länglichen Elementen aus Metall oder einer Metallegierung umgeben ist, mit den folgenden Verfahrensschritten:
Transportieren eines vorgeformten, länglichen Elements (2) aus Metall oder einer Metallegierung in seiner Längsrichtung mit etwa U-förmigen Querschnitt, Einführen mindestens einer optischen Faser (3) in den von dem U-förmigen, länglichen Element begrenzten Raum, Falten in Querrichtung oder in anderer Weise Verformen des fortschreitenden U-förmigen länglichen Elements derart, daß man einen in Umfangsrichtung im wesentlichen starren, zentralen Kern (1) erhält, der in seinem Inneren eine abgeschlossene längliche Kammer aufweist, die sich über die gesamte Länge des Kerns erstreckt und in der die oder jede fortschreitende optische Faser lose aufgenommen ist, und Auftragen um den so gebildeten, zentralen Kern mindestens eine Schicht (5) aus schraubenförmig gewundenen, blanken, länglichen Elementen aus Metall oder einer Metallegierung, dadurch gekennzeichnet, daß mindestens ein im wesentlichen starres Rohr (11), dessen Außendurchmesser geringer ist als der Innendurchmesser der länglichen Kammer, in dem durch das U-förmige, längliche Element begrenzten Raum positioniert ist und sich über die Einrichtung (10) hinaus erstreckt, durch die das U-förmige, längliche Element zur Ausbildung des zentralen Kerns in Querrichtung gefaltet oder in anderer Weise geformt wird, daß ein ferrartiges, wasserundurchlässiges Mittel (4) unter gesteuertem Druck und Menge durch einen Kanal (16) in der Rohrwand in das Rohr und aus dem Rohr in die längliche Kammer gespritzt wird, daß die oder jede optische Faser durch das starre Rohr und in die längliche Kammer mit Hilfe des fettartigen, wasserundurchlässigen Mittels gezogen wird, das zum Ausströmende des Rohrs fließt, und daß die Geschwindigkeit, mit der die oder jede optische Faser in die längliche Kammer gezogen wird, beschränkt ist, wobei die Konsistenz des fettartigen, wasserundurchlässigen Mittels, der Druck und die Geschwindigkeit, mit der das Mittel in die Kammer eingespritzt wird, und der auf die oder jede fortschreitende optische Faser ausgeübte Rückhalt derart bemessen sind, daß bei vorgegebener Länge des verseilten Körpers die Länge der oder jeder optischen Faser die Länge der länglichen Kammer um einen gesteuerten Wert übersteigt und der von der oder jeder optischen Faser nicht eingenommene Raum innerhalb der länglichen Kammer im wesentlichen mit dem fettartigen, wasserundurchlässigen Mittel gefüllt ist.

2. Verfahren nach Anspruch 1, dadurch gekennzeichnet, daß die Konsistenz des fettartigen, wasserundurchlässigen Mittels, der Druck und die Geschwindigkeit, mit der es in die längliche Kammer eingespritzt wird, und der Spannungszustand, der oder jeder fortschreitenden, optischen Faser derart sind, daß bei einer vorgegebenen Länge des verseilten Körpers die Länge der oder jeder optischen Faser die Länge der länglichen Kammer um einen vorgegebenen Betrag im Bereich von 1 bis 3 % übersteigt.

3. Verfahren nach Anspruch 1 oder 2, dadurch gekennzeichnet, daß das überschüssige, wasserundurchlässige Mittel aus dem stromabseitigen Ende des Rohrs und in Stromaufrichtung zwischen dem U-förmigen länglichen Element und dem starren Rohr und aus dem U-förmigen Element heraus fließt.

4. Verfahren nach einem der vorstehenden Ansprüche, dadurch gekennzeichnet, daß das starre Rohr in seiner Bohrung Führungseinrichtungen zum Positionieren einer einzelnen optischen Faser innerhalb der länglichen Kammer oder zwei oder mehr in Umfangsrichtung im Abstand angeordnete Führungseinrichtungen zum Positionieren zweier oder mehr optische Fasern in Umfangsrichtung im Abstand innerhalb der länglichen Kammer aufweisen.

5. Verfahren nach Anspruch 4, dadurch gekennzeichnet, daß das starre Rohr um seine Längsachse derart gedreht wird, daß die oder jede in die längliche Kammer eingeführte, optische Faser einem schraubenförmigen Weg folgt.

6. Verfahren nach Anspruch 4, dadurch gekennzeichnet, daß das starre Rohr um seine Längsachse in Schwingungsbewegung versetzt wird, so daß die oder jede in die längliche Kammer eingeführte, optische Faser einem schraubenförmigen Weg folgt, wobei sich die Schlagrichtung im Abstand entlang der Länge des verseilten Körpers umkehrt.

7. Verfahren nach einem der vorstehenden Ansprüche, dadurch gekennzeichnet, daß der der oder jeder fortschreitenden optischen Faser erteilte Spannungszustand durch den Transport zwischen einem Paar Klemmrollen verursacht wird.

8. Vorrichtung zum Herstellen eines nachgiebigen, verseilten Körpers durch das Verfahren nach Anspruch 1, mit einer Einrichtung zum Transportieren eines vorgeformten, länglichen Elements (2) in seiner Längsrichtung aus Metall oder einer Metallegierung mit etwa U-förmigem Querschnitt, einer Einrichtung zum Zuführen mindestens einer optischen Faser (3) in den von dem U-förmigen, länglichen Element begrenzten Raum und mit einer Einrichtung (10) zum Falten in Querrichtung oder in anderer Weise Ausformen des fortschreitenden, U-förmigen, länglichen Elements derart, daß ein in Umfangsrichtung im wesentlichen starrer, zentraler Kern gebildet wird, der im Innern eine geschlossene, längliche Kammer aufweist, die sich über die gesamte Länge des Kerns erstreckt und in der die oder jede fortschreitende, optische Faser lose angeordnet ist, gekennzeichnet durch mindestens ein im wesentlichen starres Rohr (11), dessen Außendurchmesser geringer ist als der Innendurchmesser der länglichen Kammer und das in dem von dem U-förmigen, länglichen Element begrenzten Raum angeordnet ist und sich über der Einrichtung zum Falten in Querrichtung oder in anderer Weise Verformen des U-förmigen, länglichen Elements zum Ausbilden des zentralen Kerns hinaus erstreckt, wobei das starre Rohr in seiner Wand mindestens einen Kanal (16) aufweist, eine Einrichtung zum Einspritzen eines fettartigen oder wasserundurchlässigen Mittels (4) mit gesteuerter Geschwindigkeit und Druck durch den Kanal in das starre Rohr, von wo es aus in die längliche Kammer fließt, und durch eine Einrichtung (14) zum Ausüben einer Rückhaltekraft auf die oder jede optische Faser, die durch das fließende, wasserundurchlässige Mittel entlang dem Rohr und in die längliche Kammer gezogen wird.

Fig.1.

Fig.2.